Europäisches Patentamt

European Patent Office

Office européen des brevets

(19)

(11) Veröffentlichungsnummer: **0 313 849 B1**

# (12) EUROPÄISCHE PATENTSCHRIFT

(45) Veröffentlichungstag der Patentschrift:
24.04.91 Patentblatt 91/17

(51) Int. Cl.$^5$: **C08F 220/18**, C08F 265/04,
C09D 7/12, // (C08F220/18,
220:12, 246:00, 212:08)

(21) Anmeldenummer: **88116097.2**

(22) Anmeldetag: **29.09.88**

(54) **Verdickungsmittel für physikalisch trocknende Anstrich- und Beschichtungsstoffe und Verfahren zur Herstellung der Verdickungsmittel.**

(30) Priorität: **02.10.87 DE 3733340**

(43) Veröffentlichungstag der Anmeldung:
**03.05.89 Patentblatt 89/18**

(45) Bekanntmachung des Hinweises auf die
Patenterteilung:
**24.04.91 Patentblatt 91/17**

(84) Benannte Vertragsstaaten:
**AT BE CH DE ES FR GB IT LI NL SE**

(56) Entgegenhaltungen:
**EP-A- 0 022 982**

(73) Patentinhaber: **BASF Aktiengesellschaft
Carl-Bosch-Strasse 38
W-6700 Ludwigshafen (DE)**

(72) Erfinder: **Krause, Hans-Joachim, Dr.
Pariser Strasse 31
W-6700 Ludwigshafen (DE)**
Erfinder: **Leib, Gernot
Asselheimer Strasse 12
W-6710 Frankenthal (DE)**
Erfinder: **Schweigger, Enrique, Dr.
Woehlerstrasse 16
W-6700 Ludwigshafen (DE)**
Erfinder: **Wistuba, Eckehardt, Dr.
Im Obergarten 7
W-6702 Bad Duerkheim (DE)**

## Beschreibung

Aus der EP-PS 42 506 sind benzinlösliche Copolymerisate aus Styrol, tert.-Butylacrylat, Isobutylmethacrylat und (Meth)acrylsäureester von Alkoholen mit 10 bis 20 Kohlenstoffatomen bekannt. Die Copolymerisate haben einen K-Wert zwischen 15 und 60 und werden als Bindemittel in benzinhaltigen Fassadenfarben oder Putzen verwendet.

In derartige lösemittelhaltige, physikalisch trocknende Fassadenfarben oder Beschichtungsstoffe müssen vielfach Verdickungsmittel eingearbeitet werden, um beispielsweise bereits in einem einzigen Arbeitsgang dickere Beschichtungen herstellen zu können und um ein starkes Eindringen des Bindemittelanteils in stark saure Untergründe, wie beispielsweise mineralische Baustoffe zu verhindern. Durch den Zusatz eines Verdickungsmittels zu den Beschichtungsstoffen sollen jedoch die Filmeigenschaften der Überzüge, wie Glanz, Haftfestigkeit und Witterungsbeständigkeit, nicht nachteilig beeinflußt werden. Aus der EP-PS 22 982 ist ein Verdickungsmittel für physikalisch trocknende Anstrich- und Beschichtungsstoffe auf Basis von in Testbenzin löslichen Bindemitteln bekannt. Das Verdickungsmittel ist dabei ein in Testbenzin gelbildendes Copolymerisat, das

(a) 5 bis 50 Gew.% Acrylsäure- und/oder Methacrylsäureester von Monoalkanolen mit 8 bis 18 Kohlenstoffatomen,
(b) 0,01 bis 2 Gew.% mindestens einer mit (a) copolymerisierbaren mehrfach olefinisch ungesättigten organischen Verbindung, z.B. Acrylsäurediester zweiwertiger 2 bis 6 Kohlenstoffatome enthaltender Alkohole,
(c) 0 bis 60 Gew.% Styrol und/oder Vinyltoluol,
(d) 0 bis 80 Gew.% eines oder mehrerer (Meth)acrylsäureester von 4 bis 7 Kohlenstoffatome enthaltenden Monoalkanolen und
(e) 0 bis 30 Gew.% weiterer, unter (a) bis (d) nicht genannter copolymerisierbarer olefinisch ungesättigter organischer Verbindungen, mit der Maßgabe einpolymerisiert enthält, daß die Summe der unter (a) bis (e) genannten Prozentzahlen 100 ist. Die bekannten Verdickungsmittel erfüllen weitgehend die an sie gestellten Anforderungen, haben jedoch den Nachteil, daß die $C_8$-$C_{18}$-Alkyl(meth)acrylate bei der Emulsionspolymerisation aufgrund der Hydrophobie unregelmäßig in das entstehende Polymerisat eingebaut werden. Dies kann zu Koagulatbildung und zu schwankenden Verdickerwirkungen der Copolymerisate führen. Als weiterer Nachteil ist zu nennen, daß die Verdicker enthaltenden Farben bei längerer Lagerung bei Temperaturen von −20°C absetzen. Dieser Niederschlag ist nur schwer aufrührbar.

Aufgabe der vorliegenden Erfindung ist es, verbesserte Verdickungsmittel aufzuzeigen, die gut reproduzierbar im Betrieb herstellbar sind, die auch bei tiefen Temperaturen stabile Farben ergeben, die 2-Phasenbildungs temperaturen in aromatenfreien Benzinen/Alkoxipropanol-1-Gemischen von −15°C aufweisen und die eine möglichst vom Lösemittel unabhängige Verdickung zeigen.

Die Aufgabe wird erfindungsgemäß gelöst mit Verdickungsmitteln auf Basis von Copolymerisaten, die (Meth)acrylester, Styrol und copolymerisierbare mindestens zwei ethylenisch ungesättigte Doppelbindungen aufweisende Monomere einpolymerisiert enthalten, für physikalisch trocknende Anstrich-und Beschichtungsstoffe, wenn das Verdickungsmittel ein in Testbenzin gelbildendes Copolymerisat ist, das

(a) 7 bis 15 Gew.% Acrylsäure- und/oder Methacrylsäureester von Monoalkanolen mit 8 C-Atomen,
(b) 0,05 bis 0,2 Gew.% mit (Meth)acrylestern und Styrol copolymerisierbaren mindestens zwei ethylenisch ungesättigte Doppelbindungen aufweisenden Monomeren,
(c) 25 bis 35 Gew.% Styrol und
(d) 49,8 bis 67,95 Gew.% mindestens eines Acrylsäure- und/oder Methacrylsäureesters von Monoalkanolen mit 4 C-Atomen

mit der Maßgabe einpolymerisiert enthält, daß die Summe der Angaben in Gew.% (a) bis (d) immer 100 beträgt.

Die Verdickungsmittel werden dadurch hergestellt, daß man Monomergemische aus

(a) 7 bis 15 Gew.% Acrylsäure- und/oder Methacrylsäureester von Monoalkanolen mit 8 C-Atomen,
(b) 0,05 bis 0,2 Gew.% mit (Meth)acrylestern und Styrol copolymerisierbaren mindestens zwei ethylenisch ungesättigte Doppelbindungen aufweisenden Monomeren,
(c) 25 bis 35 Gew.% Styrol und
(d) 49,8 bis 67,95 Gew.% mindestens eines Acrylsäure- und/oder Methacrylsäureesters von Monoalkanolen mit 4 C-Atomen, wobei die Summe der Angaben in Gew.% immer 100 beträgt, in wäßriger Emulsion, die 10 bis 55 Gew.% des Monomergemisches emulgiert enthält, polymerisiert und die Copolymerisate anschließend aus der Polymerdispersion isoliert.

Bindemittel für physikalisch trocknende Anstrich- und Beschichtungsstoffe sind beispielsweise aus der oben genannten EP-PS 42 506 bekannt. Als Bindemittel kommen insbesondere Polymerisate auf Basis von Acrylsäureestern, Methacrylsäureestern sowie Copolymerisate aus Vinylaromaten und Acrylsäureestern und/ oder Methacrylsäureestern in Betracht. Wesentliches Merkmal dieser Bindemittel ist, daß sie in Testbenzin löslich sind und einen K-Wert (bestimmt nach Fikentscher) von 15 bis 60 haben.

Die erfindungsgemäßen Verdickungsmittel bilden dagegen in Estern, z.B. Ethylacetat, sowie in sehr unpolaren Lösemitteln, wie Testbenzin, in 10 bis 30%iger Konzentration homogene, hochviskos fließende bis feste Gele aus. Diese Gele eignen sich hervorragend zur Verdickung und Regulierung des Fließverhaltens von Beschichtungsstoffen auf der Basis von in Testbenzin löslichen Poly(meth)acrylaten und Copolymerisaten aus Vinylaromaten und (Meth)acrylsäureestern. Außerdem ist es möglich, daß diese Verdickungsmittel in einigen Fällen auch als alleiniges Polymerisatbindemittel eingesetzt werden können. Die erfindungsgemäßen Verdickungsmittel entwickeln bereits in unpolaren Kohlenwasserstoffgemischen, z.B. in Testbenzin mit einem Aromatengehalt von 18% und weniger als 18% eine starke gelbildende Wirkung. Sie eignen sich daher besonders für die Anwendung in Beschichtungsstoffen, zu deren Herstellung umweltfreundliche geruchsarme Lösemittel bzw. Lösemittelgemische verwendet werden. Die erfindungsgemäßen Verdickungsmittel haben eine gute Witterungs- und Vergilbungsbeständigkeit. Sie quellen in Lösemitteln besonders schnell auf und liegen daher bereits nach einem Rühren von wenigen Minuten im Lösemittelgemisch gebrauchsfertig vor. Aus den Verdickungsmitteln entstehen sehr weiche und stippenfreie Gele. Diese Eigenschaft wirkt sich besonders günstig auf die Qualität und das Aussehen der damit hergestellten Beschichtungsstoffe aus. So können beispielsweise Beschichtungsstoffe mit ausgezeichnetem Verlauf und Beschichtungen mit hohem Glanz hergestellt werden.

Die erfindungsgemäßen Verdickungsmittel enthalten als Komponente (a) Acrylsäure- und/oder Methacrylsäureester von Monoalkanolen mit 8 C-Atomen einpolymerisiert. Diese Gruppe von Monomeren verleiht den Verdickungsmitteln lipophile Eigenschaften. Im einzelnen handelt es sich hierbei um Ethylhexylacrylat, Ethylhexylmethacrylat, n-Octylacrylat und Isooctylacrylat sowie die entsprechenden Ester der Methacrylsäure. Die lipophilen (Meth)acrylsäureester sind in den erfindungsgemäßen Verdickungsmitteln in einer Menge von 7 bis 15 Gew.% einpolymerisiert.

Als Monomere der Gruppe (b), die mit (Meth)acrylestern und Styrol copolymerisierbar sind und mindestens zwei ethylenisch ungesättigte Doppelbindungen aufweisen, eignen sich beispielsweise Acrylsäureester und Methacrylsäureester mehrwertiger, insbesondere zweiwertiger, 2 bis 6 Kohlenstoffatome enthaltender Alkohole, z.B. Ethylenglykoldiacrylat, Butandioldiacrylat, Hexandioldiacrylat sowie Diacrylate von Polyethylenglykolen, die 2 bis 34, bevorzugt 2 bis 12 Ethylenoxideinheiten enthalten, wie Diethylenglykoldiacrylat, Tetraethylenglykoldiacrylat oder Diacrylate eines Polyethylenglykols vom Molekulargewicht 1500. Es ist selbstverständlich möglich, daß auch die entsprechenden Dimethacrylate als Monomer der Gruppe (b) eingesetzt werden können. Als Vernetzer eignen sich außerdem Vinylester von ethylenisch ungesättigten $C_3$- bis $C_6$-Carbonsäuren, z.B. Vinylacrylat, Vinylmethacrylat oder Vinylitakonat. Als Monomere der Gruppe (b) kommen außerdem Vinylester von mindestens zwei Carboxylgruppen enthaltenden gesättigten Carbonsäuren sowie Di- und Polyvinylether von mindestens zweiwertigen Alkoholen in Betracht, z.B. Adipinsäuredivinylester, Butandioldivinylether und Trimethylolpropantrivinylether. Außerdem eignen sich Allylester ethylenisch ungesättigter Carbonsäuren, z.B. Allylacrylat und Allylmethacrylat, Allylether von mehrwertigen Alkoholen, z.B. Pentaerythrittriallylether, Triallylsaccharose und Pentaallylsaccharose. Weitere geeignete Monomere dieser Gruppe sind beispielsweise Methylenbisacrylamid, Methylenbismethacrylamid, Divinylethylenharnstoff, Divinylpropylenharnstoff, Divinylbenzol, Divinyldioxan, Tetraallylsilan und Tetravinylsilan. Vorzugsweise verwendet man Butandioldiacrylat und Hexandioldiacrylat. Die Monomeren der Gruppe (b) werden in einer Menge von 0,05 bis 0,2 Gew.% in das Copolymerisat einpolymerisiert.

Als Monomer der Komponente (c) wird Styrol verwendet, das in Mengen von 25 bis 35 Gew.% in das Copolymerisat einpolymerisiert wird.

Als Monomer (d) kommen Ester der Acrylsäure oder Methacrylsäure mit einwertigen Alkoholen in Betracht, die 4 Kohlenstoffatome enthalten, z.B. n-Butylacrylat, Isobutylacrylat, tert.-Butylacrylat, n-Butylmethacrylat, Isobutylmethacrylat und tert.-Butylmethacrylat. Es ist selbstverständlich auch möglich, Mischungen der genannten Monomeren einzusetzen. Die Monomeren der Gruppe (d) sind in Mengen von 49,8 bis 67,95 Gew.% am Aufbau des Verdickungsmittels beteiligt.

Die Herstellung der Verdickungsmittel erfolgt nach dem Verfahren der Emulsionspolymerisation, bei dem man Monomergemische aus den Monomeren der Gruppen (a) bis (d) in wäßriger Emulsion in Gegenwart von Polymerisationsinitiatoren bei Temperaturen von 65 bis 85°C copolymerisiert. Mit Hilfe des Emulsionspolymerisationsverfahrens gelingt es, Copolymerisate mit reproduzierbaren Verdickungseigenschaften herzustellen. Ein weiterer Vorteil liegt darin, daß man im großtechnischen Maßstab koagulatfreie Dispersionen erhält, die praktisch keine Beläge an den Polymerisationsapparaturen bilden. Als besonders vorteilhaftes Herstellverfahren hat sich dabei eine Arbeitsweise ergeben, bei der man zunächst 0,5 bis 5 Gew.%, bezogen auf die gesamte entstehende Polymerdispersion, einer aus den Monomeren (a) bis (d) separat hergestellten 10 bis 55 gew.%igen Polymerdispersion als Saatlatex vorlegt. Die Polymerkonzentration im Saatlatex beträgt vorzugsweise 25 bis 35 Gew.%. Zu der als Saatlatex vorgelegten Polymerdispersion gibt man dann, gegebenenfalls nach

3

einem Zusatz von Wasser und Emulgatoren, ca. 2 bis 5 Gew.% der zu polymerisierenden Monomerenmischung. Die Vorlage wird dann unter Stickstoffatmosphäre auf eine Temperatur von 65 bis 85°C erwärmt und durch Zugabe eines Initiators gestartet. Die Monomeren (a) bis (d) und 0,25 bis 2,5 Gew.%, bezogen auf die Monomerenmischung, eines Polymerisationsinitiators werden dann kontinuierlich oder portionsweise zu der Vorlage zugefügt und darin in dem angegebenen Temperaturbereich polymerisiert. Als Polymerisationsinitiatoren werden radikalbildende Verbindungen eingesetzt. Vorzugsweise verwendet man wasserlösliche Polymerisationsinitiatoren, insbesondere Natrium-, Kalium- und Ammoniumperoxidisulfat oder deren Gemische. Vorzugsweise setzt man 0,4 bis 1,5 Gew.%, bezogen auf die zu polymerisierende Monomermischung, an Initiatoren ein.

Wie bei Emulsionspolymerisationen üblich, verwendet man Emulgatoren. Hier haben sich besonders die Natriumsalze von $C_{12}$- bis $C_{18}$-Alkylsulfonaten bewährt. Die Emulgatoren werden in Mengen von 0,15 bis 3, vorzugsweise 0,6 bis 2,4 Gew.%, bezogen auf Monomere, eingesetzt. Die Emulgatoren können entweder zur Vorlage gegeben werden, als separater Zulauf dem Reaktionsgemisch zugeführt oder zusammen mit dem Initiator in die Polymerisationsvorrichtung eingebracht werden. Die Polymerisationsinitiatoren werden vorzugsweise in Form einer 15 bis 28%igen wäßrigen Lösung in Mengen von 0,4 bis 0,8 Gew.%, bezogen auf das Gewicht der gesamten fertigen Polymerdispersion, bei 70 bis 75°C zur Vorlage in die Polymerisationsvorrichtung eingebracht. Bezogen auf das Gewicht der gesamten fertigen Polymerdispersion gibt man innerhalb von 3 bis 8 Stunden 20 bis 40 Gew.% des Monomergemisches, 0,7 bis 2,8 Gew.% einer 40%igen Emulgatorlösung des Natriumsalzes eines $C_{12}$-$C_{18}$-Paraffinsulfonates und 0,4 bis 0,8 Gew.% der 15 bis 28%igen Initiatorlösung, wobei die beiden letzten Lösungen zuvor mit Wasser auf 3 bis 10 Gew.% verdünnt werden, gleichmäßig zu. Nach Beendigung der Monomerzugabe un dem Zudosieren der gesamten Initiatormenge kann das Reaktionsgemisch noch bis zu 2,5 Stunden bei Temperaturen in dem Bereich von 70 bis 80°C nachpolymerisiert werden.

Die Copolymerisate werden dann aus der Disperison isoliert. Hierfür kann man sich der Methoden bedienen, die in der EP-PS 22 982 angegeben sind. Vorzugsweise fällt man die Copolymerisate jedoch durch Zusatz von 0,5 bis 1,5 Gew.% Aluminiumsulfat, bezogen auf die Copolymerisate, aus der Polymerdispersion bei 35 bis 65°C aus. Die Fällung der Dispersion wird vorzugsweise in verdünnter Form unter Rühren bei Temperaturen in dem Bereich von 50 bis 60°C vorgenommen, wobei der Festgehalt der in der Dispersion befindlichen Polymeren 5 bis 20, vorzugsweise 7,5 bis 12,5 Gew.% beträgt.

Zur Entfernung der Aluminiumionen wird das gefällte Polymerisat unter Rühren bei 50 bis 70°C, bevorzugt 60°C, mit eines Base, z.B. 5%iger wäßriger Natronlauge, versetzt, so daß der pH-Wert 7 bis 8,5 beträgt. Um eine besonders optimale Körnung des gefällten Polymerisates zu erzielen, wird die Polymerisatsuspension 0,2 bis 2 Stunden bei 80 bis 95°C nachbehandelt. Diese Nachbehandlung erfolgt vorzugsweise bei 90 ± 2°C. Das Erwärmen der ausgefällten Polymerisatsuspension kann durch Einleiten von Wasserdampf in die Suspension oder durch Aufheizen des Reaktormantels erfolgen. Mit Hilfe dieser Nachbehandlung erzielt man eine besonders vorteilhafte Körnung des Copolymerisates, die für die nachfolgende Filtration, Trocknung und die Quelleigenschaften des Copolymerisates von Vorteil sind. Die Teilchengröße des Polymerisats beträgt beispielsweise >1000 µm : 0,7% ; 800 bis 1000 µm : 0,3% ; 630 bis 800 µm : 6,9% ; <100 µm : 74,9%.

Das ausgefällte Polymerisat wird dann abfiltriert, mit Wasser gewaschen und bei 30 bis 60°C, vorzugsweise 45 bis 55°C getrocknet. Das Trocknen erfolgt vorzugsweise im Umlufttrockenschrank, Wirbelbett oder Stromtrockner. Die erfindungsgemäßen Verdickungsmittel können auch als Alleinbindemittel in Anstrich- und Beschichtungsstoffen verwendet werden. Vorzugsweise verwendet man sie jedoch in Kombination mit bekannten Polymerisatbindemitteln ähnlicher Monomerenzusammensetzung in Anstrich- und Beschichtungsstoffen. Geeignete mit dem erfindungsgemäßen Verdickungsmittel zu kombinierende Polymerisatbindemittel sind beispielsweise Copolymerisate auf Basis von (Meth)acrylsäureestern bzw. Styrol und (Meth)acrylsäureestern, die in Testbenzin (nach DIN 51 632) sowie in Aromaten, wie Toluol, Xylol und Estern, löslich sind. Aus dem erfindungsgemäßen Verdickungsmittel lassen sich, vorzugsweise in Kombination mit verträglichen weiteren Bindemitteln, durch Auflösen oder Aufquellen in den üblichen Lacklösemitteln, z.B. Benzinkohlenwasserstoffen, aromatischen Kohlenwasserstoffen, Estern und Ketonen gequollene Gele für verschiedenartige Beschichtungsstoffe und Klebstoffe herstellen. Zur Herstellung solcher Beschichtungsstoffe können in bekannter Weise Pigmente, Füllstoffe, metallische oder mineralische Körper sowie weitere Lackrohstoffe, wie Weichmacher, in die Lösung oder in die Gele eingearbeitet werden. Das gewünschte Fließverhalten der Beschichtungsstoffe läßt sich in einfacher Weise durch Änderung des Anteils der erfindungsgemäßen Verdickungsmittel im gesamten Bindemittel der Beschichtung wie auch durch Auswahl und Menge der Pigmente und Füllstoffe leicht einstellen. Es können so beispielsweise Beschichtungsstoffe hergestellt werden, die verschieden stark plastisches, pseudoplastisches, thixotropes oder auch rheoplexes Fließverhalten sowie Kombinationen dieser Erscheinungsformen aufweisen.

Die Pigmentvolumenkonzentrationen der Beschichtungsstoffe betragen 15 bis 75%. Der Bindemittelanteil der Beschichtungsstoffe liegt in dem Bereich von 5 bis 45. Gew.%. Die Verdickungsmittel werden in einer Menge von 1 bis 25 Gew.% in den Beschichtungsstoffen eingesetzt. Die erfindungsgemäßen Verdickungsmittel ermöglichen daher die Herstellung von testbenzinhaltigen Beschichtungsstoffen, die sich durch hervorragende anwendungstechnische Eigenschaften auszeichnen, z.B. gute Spritzbarkeit, Rollbarkeit und Streichbarkeit. Die Beschichtungsstoffe, die die erfindungsgemäßen Verdickungsmittel enthalten, zeigen kein Pigmentabsetzen mehr, kein bzw. ein vermindertes Ablaufen an senkrechten Flächen, kein oder nur ein geringes Abwandern des Bindemittels in saugende Untergründe, haben einen guten Verlauf und ergeben Filme mit hohem Glanz in Deckanstrichen. Die erfindungsgemäßen Verdickungsmittel werden bevorzugt zur Herstellung lösemittelhaltiger Fassadenfarben verwendet, die sich durch einen besonders guten Verlauf auszeichnen und somit die Bildung gleichmäßiger Schichtdicken gestatten.

Die in den Beispielen angegebenen Teile und Prozente sind, soweit nichts anderes angegeben, Gewichtsteile bzw. Gewichtsprozente. Die K-Werte der löslichen Polymerisate wurden nach H. Fikentscher in Tetrahydrofuran bei 25°C und einer Polymerkonzentration von 1 Gew.% gemessen (vgl. Cellulose Chemie, Band 13, Seiten 48 bis 64 und 71 bis 74 (1932) ; dabei bedeutet $K = k \cdot 10^3$). Der LD-Wert wird dadurch bestimmt, daß man zunächst 10 g einer 50%igen Dispersion in 490 g Wasser verteilt. Davon werden 10 g entnommen und mit Wasser auf 1 l aufgefüllt. In einer 25 mm dicken Kuvette wird die Lichtdurchlässigkeit im Vergleich zu Wasser (100%) bestimmt.

Beispiel 1

(a) Herstellung eines Saatlatex

In einem Rührkessel, der mit Thermometer, Rückflußkühler und Zulaufgefäßen sowie Vorrichtungen für das Arbeiten unter Stickstoff ausgestattet ist, werden 730 g Wasser, 1,16 g Natrium-$C_{12}$-$C_{18}$-Alkylsulfonat und 38,8 g einer Monomermischung vorgelegt, die aus 150 g Isobutylmethacrylat, 110 g Styrol, 81,1 g tert.-Butylacrylat, 46,5 g Ethylhexylacrylat und 0,5 g Hexandioldiacrylat besteht. Die Vorlage wird gerührt und unter Stickstoffatmosphäre auf eine Temperatur von 72°C erhitzt. Sobald die Temperatur von 72°C erreicht ist, fügt man eine wäßrige Lösung von 2,3 g Ammoniumpersulfat in 60 g Wasser zu und erhitzt auf 75°C. Bei dieser Temperatur wird dann damit begonnen, gleichzeitig den Rest der Monomerenmischung sowie eine Lösung von 20 g Natrium-$C_{12}$-$C_{18}$-Alkylsulfonat und 2,3 g Ammoniumpersulfat in 114,7 g Wasser gleichmäßig innerhalb von 5 Stunden zuzudosieren. Nach Beendigung der Monomer- und Initiatorzugabe wird das Reaktionsgemisch noch 2,5 Stunden bei 75°C nachpolymerisiert. Der so erhaltene Saatlatex hat folgende Kenndaten

| | |
|---|---|
| Festgehalt : | 30,4% |
| pH-Wert : | 1,7 |
| LD-Wert : | 81% |
| Oberflächenspannung : | 43 dyn/cm |
| Koagulatgehalt : | 1,0% |

(b) Herstellung der Polymerdispersion

Man verfährt wie bei der Herstellung des Saatlatex gemäß (a) mit der einzigen Ausnahme, daß man in dem Rührkessel noch zusätzlich 10,6 g der 30,4%igen Polymerdispersion, deren Herstellung unter (a) beschrieben wurde, vorlegt. Man erhält dann eine Polymerdispersion mit einem Feststoffgehalt von 31,2%, einem pH-Wert von 1,6 und einer Oberflächenspannung von 32 dyn/cm. Der LD-Wert der Dispersion beträgt 38%.

(c) Fällung der Polymerdispersion

In einem beheizbaren Kessel, der mit einem Rührer ausgestattet ist, werden 1300 g Wasser vorgelegt. Unter Rühren löst man darin 83 g einer 2%igen wäßrigen Aluminiumsulfatlösung. Die Vorlage wird dann auf 55°C erwärmt und bei dieser Temperatur innerhalb einer Stunde mit 665 g der Polymerdispersion gemäß (b) versetzt. Dabei fällt das Polymerisat aus. Sofern die Mischung nicht gerührt wird, setzt es sich auf dem Boden des Kessels ab.

Die Mischung wird unter Rühren auf 60°C erwärmt und mit 35 g 5%iger wäßriger Natronlauge versetzt. Der pH-Wert des Reaktionsgemisches beträgt danach 8,1 Das Reaktionsgemisch wird nach 15 Minuten auf eine Temperatur von 90°C erwärmt und 15 Minuten bei dieser Temperatur gerührt. Anschließend kühlt man und filtriert das Copolymerisat ab. Der Filterkuchen wird 3mal mit jeweils 300 ml Wasser gewaschen und danach bei 50°C im Umlufttrockenschrank 24 Stunden getrocknet. Das so erhaltene Verdickungsmittel hat fol-

gende Kennzahlen :

```
Aussehen:                    weißes Pulver
Teilchengröße:               75 % weniger als 100 µm
Quellbar in:                 Testbenzin, Butylacetat
Viskosität in Testbenzin 15 %ig:    450 mPa.s
             - " -          20 %ig:  1060 mPa.s
             - " -          25 %ig:  1340 mPa.s
             - " -          30 %ig:  3540 mPa.s
```

Beispiel 2

Herstellung einer benzinlöslichen Fassadenfarbe

In 117 g einer Mischung aus Testbenzin des Siedebereichs 155 bis 185°C und einem aromatischen Kohlenwasserstoff mit einem Gehalt an Trimethylbenzolen von ca. 70% und einem Siedebereich von 160 bis 182°C im Gewichtsverhältnis 2 : 1 werden 63 g eines benzinlöslichen Copolymerisates aus Styrol, tert.-Butylacrylat, Isobutylmethacrylat und Laurylacrylat (erhältlich nach Beispiel 1 der EP-PS 42 506) gelöst. In dieser Lösung werden dann 179 g einer 15%igen Lösung des gemäß Beispiel 1 hergestellten Verdickungsmittels, das in Testbenzin des Siedebereichs von 155 bis 185°C und einem aromatischen Kohlenwasserstoff mit einem Gehalt an Trimethylbenzolen von ca. 70% und einem Siedebereich von 160 bis 182°C im Gewichtsverhältnis 2 :1 gelöst ist, zugegeben. Außerdem fügt man unter guter Durchmischung der Komponenten 72 g Chlorparaffin, 179 g Titandioxid (Rutil), 287 g Kalziumcarbonat-Füllstoff, 72 g Kaliumaluminium-Silikat-Füllstoff und 31 g feinteiliges Siliciumdioxid zu. Die so erhältliche Fassadenfarbe hat eine Pigmentvolumenkonzentration von 60%. Die Teilchendurchmesser der eingesetzten Pigmente (1 µm) und Füllstoffe (5 bis 150 µm) liegen in den für die Anstrichindustrie üblichen Bereichen.

Der Verlauf der Farbe ist sehr gut. Diese Bewertung wurde dadurch erhalten, daß man 100 g der Farbe mit einem Pinsel auf eine senkrechte Fläche (Natronkraftpapier) aufgetragen hat. Nach einer Trocknungszeit von 30 Minuten wurde die Güte der Oberfläche hinsichtlich Pinselstriche und Ablaufen der Farbe beurteilt. Es waren keine Pinselstriche zu sehen (guter Verlauf) und die Farbe lief nicht ab.

Die Wetterbeständigkeit der Anstriche ist sehr gut. Die Farbe hat eine Viskosität von 4200 mPas.

Die Farbe war nach einer Lagerzeit von 7 Tagen bei –20°C homogen (kein Bodensatz).

**Ansprüche**

1. Verdickungsmittel auf Basis von Copolymerisaten, die (Meth)acrylester, Styrol und copolymerisierbare mindestens zwei ethylenisch ungesättigte Doppelbindungen aufweisende Monomere einpolymerisiert enthalten, für physikalisch trocknende Anstrich- und Beschichtungsstoffe, dadurch gekennzeichnet, daß das Verdickungsmittel ein in Testbenzin gelbildendes Copolymerisat ist, das

(a) 7 bis 15 Gew.% Acrylsäure- und/oder Methacrylsäureester von Monoalkanolen mit 8 C-Atomen,

(b) 0,05 bis 0,2 Gew.% mit (Meth)acrylestern und Styrol copolymerisierbaren mindestens zwei ethylenisch ungesättigte Doppelbindungen aufweisenden Monomeren,

(c) 25 bis 35 Gew.% Styrol und

(d) 49,8 bis 67,95 Gew.% mindestens eines Acrylsäure- und/oder Methacrylsäureesters von Monoalkanolen mit 4 C-Atomen

mit der Maßgabe einpolymerisiert enthält, daß die Summe der Angaben in Gew.% (a) bis (d) immer 100 beträgt.

2. Verfahren zur Herstellung der Verdickungsmittel nach Anspruch 1, dadurch gekennzeichnet, daß man Monomer-Gemische aus

(a) 7 bis 15 Gew.% Acrylsäure- und/oder Methacrylsäureester von Monoalkanolen mit 8 C-Atomen,

(b) 0,05 bis 0,2 Gew.% mit (Meth)acrylestern und Styrol copolymerisierbaren mindestens zwei ethylenisch ungesättigte Doppelbindungen aufweisenden Monomeren,

(c) 25 bis 35 Gew.% Styrol und

(d) 49,8 bis 67,95 Gew.% mindestens eines Acrylsäure- und/oder Methacrylsäureesters von Monoalkanolen mit 4 C-Atomen,

wobei die Summe der Angaben in Gew.% immer 100 beträgt, in wäßriger Emulsion in Gegenwart von $C_{12}$-$C_{18}$-Alkylsulfonaten als Emulgator zu Polymerdispersionen mit einem Feststoffgehalt von 10 bis 55 Gew.% polymerisiert und die Copolymerisate anschließend aus der Polymerdispersion isoliert.

3. Verfahren nach Anspruch 2, dadurch gekennzeichnet, daß man zunächst 0,5 bis 5 Gew.%, bezogen auf die gesamte entstehende Polymerdispersion, einer aus den Monomeren (a) bis (d) separat hergestellten 10 bis 55 gew.%igen Polymerdispersion als Saatlatex vorlegt und dann zu dieser Polymerdispersion bei 65 bis 85°C die Monomeren (a) bis (d) und 0,25 bis 2,5 Gew.%, bezogen auf die Monomermischung, Natrium-, Kalium- und/oder Ammoniumperoxidisulfat kontinuierlich oder portionsweise zufügt und darin polymerisiert.

4. Verfahren nach den Ansprüchen 2 und 3, dadurch gekennzeichnet, daß man zur Herstellung der wäßrigen Monomeremulsion 0,15 bis 3 Gew.%, bezogen auf die Monomeren, Natrium-$C_{12}$- bis $C_{18}$-alkylsulfonaten als Emulgator einsetzt.

5. Verfahren nach den Ansprüchen 2 bis 4, dadurch gekennzeichnet, daß man die Copolymerisate durch Zusatz von 0,5 bis 1,5 Gew.% Aluminiumsulfat, bezogen auf die Copolymerisate, aus der Polymerdispersion bei 35 bis 65°C ausfällt.

6. Verfahren nach den Ansprüchen 2 bis 5, dadurch gekennzeichnet, daß man die aus den Polmerdispersionen ausgefällten Copolymerisate durch Zusatz einer Base bei pH-Werten von 7 bis 8,5 und Temperaturen von 50 bis 70°C nachbehandelt.

7. Verfahren nach Anspruch 2, dadurch gekennzeichnet, daß man die aus den Polymerdispersionen ausgefällten Copolymerisate bei 80 bis 95°C nachbehandelt.

## Claims

1. A thickener based on copolymers which contain, as copolymerized units, (meth)acrylates, styrene and copolymerizable monomers possessing two or more ethylenically unsaturated double bonds, for physically drying paints and coating materials, wherein the thickener is a copolymer which forms a gel in mineral spirit and contains, as copolymerized units,

(a) from 7 to 15% by weight of acrylates and/or methacrylates of monoalkanols of 8 carbon atoms,
(b) from 0.05 to 0.2% by weight of monomers which are copolymerizable with (meth)acrylates and styrene and possess two or more ethylenically unsaturated double bonds,
(c) from 25 to 35% by weight of styrene and
(d) from 49.8 to 67.95% by weight of one or more acrylates and/or methacrylates of monoalkanols of 4 carbon atoms,
with the proviso that the sum of the percentages by weight (a) to (d) is always 100.

2. A process for the preparation of a thickener as claimed in claim 1, wherein a monomer mixture consisting of

(a) from 7 to 15% by weight of acrylates and/or methacrylates of monoalkanols of 8 carbon atoms,
(b) from 0.05 to 0.2% by weight of monomers which are copolymerizable with (meth)acrylates and styrene and possess two or more ethylenically unsaturated double bonds,
(c) from 25 to 35% by weight of styrene and
(d) from 49.8 to 67.95% by weight of one or more acrylates and/or methacrylates of monoalkanols of 4 carbon atoms,
the sum of the percentages by weight always being 100, is polymerized in aqueous emulsion in the presence of a $C_{12}$-$C_{18}$-alkylsulfonate as an emulsifier to give a polymer dispersion having a solids content of from 10 to 55% by weight, and the copolymer is then isolated from the polymer dispersion.

3. A process as claimed in claim 2, wherein from 0.5 to 5% by weight, based on the total polymer dispersion formed, of a 10-55% strength by weight polymer dispersion prepared separately from the monomers (a) to (d) are initially taken as a seed latex, and the monomers (a) to (d) and from 0.25 to 2.5% by weight, based on the monomer mixture, of sodium peroxydisulfate, potassium peroxydisulfate or ammonium peroxydisulfate are then added continuously or a little at a time to this polymer dispersion at from 65 to 85°C and are polymerized therein.

4. A process as claimed in claim 2 or 3, wherein from 0.15 to 3% by weight, based on the monomers, of a sodium $C_{12}$-$C_{18}$-alkysulfonate are used as an emulsifier for the preparation of aqueous monomer emulsion.

5. A process as claimed in claim 2 or 3 or 4, wherein the copolymer is precipitated from the polymer dispersion at from 35 to 65°C by adding from 0.5 to 1.5% by weight, based on the copolymer, of aluminum sulfate.

6. A process as claimed in claim 2 or 3 or 4 or 5, wherein the copolymer precipitated from the polymer dispersion is aftertreated, at a pH of from 7 to 8.5 and at from 50 to 70°C by adding a base.

7. A process as claimed in claim 2, wherein the copolymer precipitated from the polymer dispersion is aftertreated at from 80 to 95°C.

## Revendications

1. Epaississant à base de copolymères qui contiennent en liaison polymère des esters (méth)acryliques, du styrène et des monomères copolymérisables présentant au moins deux doubles liaisons éthyléniquement insaturées, pour des peintures et des produits de revêtement à séchage physique, caractérisé en ce que l'épaississant est un copolymère qui gélifie dans le white-spirit et qui contient en liaison polymère

(a) de 7 a 15% en poids d'esters d'acide acrylique et/ou d'acide méthacrylique et de mono-alcanols à 8 atomes de carbone,

(b) de 0, 05 à 0,2% en poids de monomères présentant au moins deux doubles liaisons éthyléniquement insaturées et copolymérisables avec les esters (méth)acryliques et le styrène

(c) de 25 à 35% en poids de styrène et

(d) de 49,8 à 67,95% en poids d'au moins un ester d'acide acrylique et/ou d'acide méthacrylique et de mono-alcanols à 4 atomes de carbone,

étant spécifié que la somme des pourcentages en poids de (a) à (d) s'élève toujours à 100.

2. Procédé de préparation des épaississants selon la revendication 1, caractérisé en ce qu'on polymérise des mélanges de monomères composés

(a) de 7 à 15% en poids d'esters d'acide acrylique et/ou d'acide méthacrylique et de mono-alcanols à 8 atomes de carbone,

(b) de 0,05 à 0,2% en poids de monomères présentant au moins deux doubles liaisons éthyléniquement insaturées et copolymérisables avec les esters (méth)acryliques et le styrène

(c) de 25 à 35% en poids de styrène et

(d) de 49,8 à 67,95% en poids d'au moins un ester d'acide acrylique et/ou d'acide méthacrylique et de mono-alcanols à 4 atomes de carbone,

la somme des pourcentages en poids de (a) à (d) s'élevant toujours à 100, en émulsion aqueuse en présence d'alkyl sulfonates en $C_{12}$-$C_{18}$ servant d'émulsifiant, pour former des dispersions de polymère ayant une teneur en matière solide de 12 à 55% en poids, puis on isole les copolymères de la dispersion de polymère.

3. Procédé selon la revendication 2, caractérisé en ce qu'on commence par introduire au préalable, en tant que latex de germination, de 0,5 à 5% en poids, par rapport à la dispersion de polymère formée au total, d'une dispersion de polymère à 10-55% préparée séparément à partir des monomères (a) à (d), puis on ajoute en continu ou par portion ; à cette dispersion de polymère, à une température de 65 à 85°C, les monomères (a) à (d) et de 0,25 à 2,5% en poids, par rapport au mélange de monomères, de peroxodisulfate de sodium, de potassium et/ou d'ammonium, et on les y polymérise.

4. Procédé selon la revendication 2 ou 3, caractérisé en ce que pour la préparation de l'émulsion aqueuse de monomères, on utilise comme émulsifiant de 0,15 à 3% en poids, par rapport aux monomères, d'alkylsulfonates en $C_{12}$-$C_{18}$ de sodium.

5. Procédé selon l'une quelconque des revendications 2 à 4, caractérisé en ce qu'on sépare les copolymères de la dispersion de polymère par précipitation à une température de 35 à 65°C, par addition de 0,5 à 1,5% en poids de sulfate d'aluminium par rapport aux copolymères.

6. Procédé selon l'une quelconque des revendications 2 à 5, caractérisé en ce qu'on soumet les copolymères séparés des dispersions de polymère par précipitation à un post-traitement à un pH de 7 à 8,5 et à une température de 50 à 70.°C par addition d'une base

7. Procédé selon la revendication 2, caractérisé en ce qu'on soumet les copolymères séparés des dispersions de polymère par précipitation à un post-traitement à une température de 80 à 95°C.